# EUROPEAN PATENT APPLICATION

(11) **EP 4 614 924 A1**
(43) Date of publication of application: **10.09.2025**
(21) Application number: 23885029.1
(22) Date of filing: 02.11.2023
(51) Int. Cl.: H04L 41/16

(54) **AI MODEL UPDATING METHOD AND COMMUNICATION APPARATUS**

(30) Priority: 03.11.2022 CN 202211372697
(71) Applicant: Spreadtrum Communications (Shanghai) Co., Ltd., Shanghai 201203 (CN)
(72) Inventor: CHEN, Xiaoyu, Shanghai 201203 (CN)
(74) Representative: Mewburn Ellis LLP
(86) International application number: PCT/CN2023/129256
(87) International publication number: WO 2024/094103

(57) **Abstract**

A method for updating an artificial intelligence (AI) model and a communication device are provided in the disclosure. The method includes: updating a currently used second AI model in response to first model association information different from current model association information being detected; and/or, updating a currently used second AI model in response to current model association information being switched to first model association information; and/or updating a currently used second AI model in response to detecting that current model association information exceeds a preset threshold or preset range; and/or updating a currently used second AI model in response to an output result of the second AI model not meeting a preset condition. In the disclosure, an AI model of a terminal device can be quickly updated in mobile scenarios or network switching scenarios, thereby helping to improve communication efficiency.

## Description

### CROSS-REFERENCE TO RELATED APPLICATION(S)

This application claims priority to Chinese Patent Application No. 202211372697.6, filed with the China National Intellectual Property Administration on November 3, 2022 and entitled "METHOD FOR UPDATING ARTIFICIAL INTELLIGENCE (AI) MODEL AND COMMUNICATION DEVICE", the entire disclosure of which is hereby incorporated by reference.

### TECHNICAL FIELD

This disclosure relates to the field of communication technology, and more particularly, to a method for updating an artificial intelligence (AI) model and a communication device.

### BACKGROUND

With the development of science and technology, artificial intelligence (AI) technology has emerged. AI technology can be widely applied in various fields. When applied to the field of wireless communication technology, AI technology can enhance the throughput of wireless communication systems, effectively reduce processing latency, and increase user capacity, which is an important task for future wireless communication technology.

For a device, the AI functionality can be implemented through a deployed AI model. Currently, in the 3rd generation partnership project (3GPP) standardization, it is supported to deploy AI models on terminal devices to implement AI model applications in wireless communication systems. How to trigger the update of the AI model on the terminal device is an urgent technical problem to be solved.

### SUMMARY

Embodiments of the present disclosure provide a method for updating an artificial intelligence (AI) model, which can quickly update the AI model of a terminal device, thereby helping to improve communication efficiency.

In a first aspect, embodiments of the present disclosure provide a method for updating an AI model, which can be executed by a terminal device or by an apparatus matched with the terminal device, such as a chip, chip module, or processor. The method may include: updating a currently used second AI model in response to first model association information different from current model association information being detected; and/or, updating a currently used second AI model in response to current model association information being switched to first model association information; and/or updating a currently used second AI model in response to detecting that current model association information exceeds a preset threshold or preset range; and/or updating a currently used second AI model in response to an output result of the second AI model not meeting a preset condition.

It can be seen that in the first aspect, several ways to trigger the update of the AI model on the terminal device are provided. When at least one of these cases occurs, the terminal device can quickly trigger the update of the currently used second AI model, which helps to better adapt to changes in the communication environment and thus helps to improve communication efficiency.

The first model association information different from the current model association information being detected can be understood as changes in model association information caused by mobile scenarios or network switching scenarios. Updating the currently used second AI model specifically can be updating the currently used second AI model to a first AI model. Attribute information of the first AI model has an association relationship with the first model association information; and attribute information of the second AI model has an association relationship with the current model association information. Therefore, in mobile scenarios or network switching scenarios, the AI model of the terminal device can be quickly and accurately updated, thereby helping to improve communication quality and efficiency.

Switching from the current model association information to the first model association information can be understood as changes in model association information caused by mobile scenarios or network switching scenarios. Updating the currently used second AI model specifically can be updating the currently used second AI model to a first AI model. Attribute information of the first AI model has an association relationship with the first model association information; and attribute information of the second AI model has an association relationship with the current model association information. Therefore, in mobile scenarios or network switching scenarios, the AI model of the terminal device can be quickly and accurately updated, thereby helping to improve communication quality and efficiency.

When it is detected that the current model association information exceeds a preset threshold or preset range, the currently used second AI model can be quickly updated to adapt to changes in the communication environment, thereby helping to improve communication efficiency.

An output result of the currently used second AI model does not meet a preset condition, which can be understood as the currently used second AI model not meeting performance requirements. Therefore, the currently used second AI model is updated so that an updated AI model can meet performance requirements.

In one possible implementation, the first model association information may include, but is not limited to, at least one of the following information: first operator identifier information, first public land mobile network (PLMN) information, first network device manufacturer identifier information, first tracking area identity (TAI) information, first steering of roaming (SOR) information, first user equipment route selection policy (URSP) information, first operating frequency information, first cell information, reference signal information associated with the first cell information, first channel quality information, first timestamp information, first terminal device information.

The first cell information may include, but is not limited to, at least one of the following information: first cell group information, first serving cell identifier information, first physical cell identifier information, first transmission reception point (TRP) identifier information, first bandwidth part (BWP) identifier.

In one possible implementation, the attribute information of the first AI model may include, but is not limited to, at least one of the following information: A model identifier of the first AI model, model structure information of the first AI model, a model parameter of the first AI model.

In one possible implementation, the currently used second AI model can be updated to the first AI model specifically as follows. When the first AI model is different from the second AI model, and the terminal device supports the first AI model, the currently used second AI model can be updated to the first AI model specifically. Therefore, in mobile scenarios or network switching scenarios, the currently used second AI model of the terminal device can be updated to the first AI model, which has an association relationship with the first model association information, helping to improve communication quality and efficiency.

Furthermore, when the first AI model is different from the second AI model, the terminal device supports the first AI model, and a state of the first AI model is not a deactivation state, the currently used second AI model is updated to the first AI model. That is, when the state of the first AI model is in the deactivation state, the currently used second AI model will not be updated to the first AI model.

In one possible implementation, when the first AI model is different from the second AI model, and the terminal device does not support the first AI model, a target AI model that meets a similarity condition is selected from AI models supported by the terminal device according to the first model association information; and the first AI model or the second AI model is updated to the target AI model. When the terminal device does not support the first AI model, the target AI model whose attribute information is closest to that of the first AI model can be selected, which can help improve communication efficiency to a certain extent.

In one possible implementation, when the first AI model is different from the second AI model, and the terminal device does not support the first AI model, a first request message is sent to a network device, where the first request message indicates attribute information of a third AI model. That is, when the terminal device does not support the first AI model, the terminal device requests to use the third AI model from the network device. A first response message from the network device is received, and when the first response message indicates acknowledgement information, the first AI model or the second AI model is updated to the third AI model. Conversely, when the first response message indicates negative acknowledgement information, the AI model update is stopped, or the terminal device can send the first request message to the network device again, in this case, the first request message indicates attribute information of another AI model that the terminal device requests to use (that is, an AI model different from the third AI model). The terminal device waits to receive acknowledgement or negative acknowledgement information from the network device.

In one possible implementation, when the first AI model is the same as the second AI model, the association relationship between the current model association information and the attribute information of the second AI model is updated to an association relationship between the first model association information and the attribute information of the second AI model. Therefore, the association relationship between model association information and attribute information of an AI model can be updated in real time.

In one possible implementation, after updating the currently used second AI model to the first AI model, the second AI model can be deactivated to avoid using two or more AI models simultaneously, reducing the processing load of the terminal device. Updating the second AI model to the first AI model implies activating and using the first AI model.

In one possible implementation, a first signaling from the network device is received, where the first signaling indicates the first model association information.

In one possible implementation, the first model association information includes first channel quality information, and the method further includes: measuring a received reference signal to obtain the first channel quality information. That is, the first model association information may be obtained by the terminal device through measurement.

In one possible implementation, before updating the second AI model, the method further includes: sending a second request message to the network device. The second request message may include, but is not limited to, at least one of the following: use of an AI model suggested by a terminal device, attribute information of an AI model suggested by the terminal device, an AI model update duration suggest by the terminal device, reference signal information suggested by the terminal device, the number of receive beams expected by the terminal device.

Furthermore, an uplink resource corresponding to the second request message includes at least one of the following: a pre-configured periodic physical uplink channel resource, an uplink grant resource used most frequently in a first preset time period before the second request message being sent, a last used uplink grant resource, a next available uplink grant resource, a random access resource associated with the first model association information, a random access resource corresponding to reference signal information associated with the first model association information.

Furthermore, the method further includes: receiving a second response message from the network device. The second response message is used to respond to the second request message. The second response message may include, but is not limited to, at least one of the following information: acknowledgement information or negative acknowledgement information, reference signal information matching the use of the AI model suggested by the terminal device, a designated AI model update duration, or reference signal information of a reference signal sent by the network device.

In one possible implementation, the method further includes the following. When an output result of the first AI model does not meet a preset condition, a target AI model is selected from AI models supported by the terminal device according to the first model association information, and the first AI model is updated to the target AI model. The target AI model meets a similarity condition. That is, when the output result of the first AI model does not meet performance requirements, the first AI model can be updated to the target AI model.

In one possible implementation, the method further includes the following. When a state of the first AI model is a deactivation state, a target AI model is selected from AI models supported by the terminal device according to the first model association information, and the first AI model or the second AI model is updated to the target AI model. The target AI model meets a similarity condition. That is, when the first AI model is deactivated, the first AI model or the second AI model can be updated to the target AI model.

In one possible implementation, the method may include the following. When the first AI model is different from an AI model indicated by the AI model indication information, a target AI model is selected from AI models supported by the terminal device according to the first model association information, and the first AI model or the second AI model is updated to the target AI model. The target AI model meets a similarity condition. That is, when the first AI model is different from the AI model indicated by the network device, the first AI model or the second AI model can be updated to the target AI model.

In one possible implementation, the target AI model meeting the similarity condition includes at least one of the following. A difference between a model identifier of the first AI model and a model identifier of the target AI model is less than or equal to a first threshold. The first model association information is the same as or has a similarity greater than a second threshold with model association information associated with the target AI model. The target AI model is an AI model associated with preset cell information, where the preset cell information is contained in configured or activated cell information; or, the preset cell information is cell information associated with a target transmission configuration indication (TCI) state, and the target TCI state is indicated, configured, or activated by a second signaling. A time difference between reception time of the second signaling and a current system time is less than a third threshold. The target AI model is an AI model that was used most frequently in a second preset time period before the second AI model being updated or a last used AI model.

In one possible implementation, the method further includes: receiving a third signaling from the network device, where the third signaling indicates the association relationship between the first model association information and the attribute information of the first AI model. That is, the network device can indicate the association relationship between each model association information and attribute information of each AI model, so that the network device and the terminal device have a consistent understanding of the association relationship between the AI model and the model association information of the terminal device.

In one possible implementation, the method further includes: determining the association relationship between the first model association information and the attribute information of the first AI model. That is, the terminal device maintains the association relationship between each model association information and attribute information of each AI model, which can improve the proactivity of the terminal device.

In one possible implementation, the association relationship between the first model association information and the attribute information of the first AI model is predefined by protocol. That is, the protocol predefines the association relationship between each model association information and attribute information of each AI model, so that the network device and the terminal device have a consistent understanding of the association relationship between the AI model and the model association information of the terminal device.

In a second aspect, the present disclosure provides a communication device. The communication device includes a processing unit. The processing unit is configured to update a currently used second AI model in response to first model association information different from current model association information being detected; and/or the processing unit is configured to update a currently used second AI model in response to current model association information being switched to first model association information; and/or the processing unit is configured to update a currently used second AI model in response to detecting that current model association information exceeds a preset threshold or preset range; and/or the processing unit is configured to update a currently used second AI model in response to an output result of the second AI model not meeting a preset condition.

In a third aspect, the present disclosure provides a communication device. The communication device includes a processor, a memory, and a computer program or instruction stored in the memory. The processor is configured to execute the computer program or instruction to implement the method as described in the first aspect and any of its possible implementations.

In a fourth aspect, the present disclosure provides a chip. In one implementation, the chip is configured to update a currently used second AI model in response to first model association information different from current model association information being detected; and/or, update a currently used second AI model in response to current model association information being switched to first model association information; and/or update a currently used second AI model in response to detecting that current model association information exceeds a preset threshold or preset range; and/or update a currently used second AI model in response to an output result of the second AI model not meeting a preset condition.

In a fifth aspect, the present disclosure provides a computer-readable storage medium. The computer-readable storage medium stores a computer-readable instruction which, when executed on a computer, causes the computer to perform the method as described in the first aspect and any of its possible implementations.

In a sixth aspect, the present disclosure provides a computer program or computer program product, which includes code or instructions which, when executed on a computer, causes the computer to perform the method as described in the first aspect and any of its possible implementations.

In a seventh aspect, the present disclosure provides a chip module, which includes a communication module, a power module, a storage module, and a chip. The power module is configured to provide power to the chip module; the storage module is configured to store data and instructions; the communication module is configured for internal communication of the chip module or for communication between the chip module and external devices; and the chip is configured to perform the method as described in the first aspect and any of its possible implementations.

### BRIEF DESCRIPTION OF THE DRAWINGS

FIG. 1 is a schematic diagram of an architecture of a communication system adopting solutions of the present disclosure.
FIG. 2 is a flowchart of a method for updating an AI model provided in embodiments of the present disclosure.
FIG. 3 is another flowchart of a method for updating an AI model provided in embodiments of the present disclosure.
FIG. 4 is a structural diagram of a communication device provided in the present disclosure.
FIG. 5 is a structural diagram of another communication device provided in the present disclosure.
FIG. 6 is a structural diagram of a chip module provided in embodiments of the present disclosure.

### DETAILED DESCRIPTION

In the present disclosure, "first", "second", etc., are used to distinguish the same items or similar items that have basically the same functions and actions. It may be understood by those skilled in the art that "first", "second", etc., do not limit the quantity and execution order, and "first", "second", etc., do not necessarily mean different. "And/or" describes an association between associated objects, indicating that there can be three relationships, for example, A and/or B, which can mean: A exists alone, A and B exist together, or B exists alone. The character "j" generally indicates an "or" relationship between the associated objects.

It may be understood that in the present disclosure, "at least one" means one or more; and "multiple" means two or more. In addition, in the present disclosure, "equal to" can be used with "greater than" or "less than". When "equal to" is used with "greater than", the technical solution of "greater than" is adopted; and when "equal to" is used with "less than", the technical solution of "less than" is adopted.

Firstly, a system architecture involved in the present disclosure is described.

The present disclosure can be applied to the 5th generation (5G) system, also known as a new radio (NR) system; or the present disclosure can be applied to the 6th generation (6G) system, or the 7th generation (7G) system, or other future communication systems; or the present disclosure can also be used in device-to-device (D2D) systems, machine-to-machine (M2M) systems, vehicle-to-everything (V2X), etc.

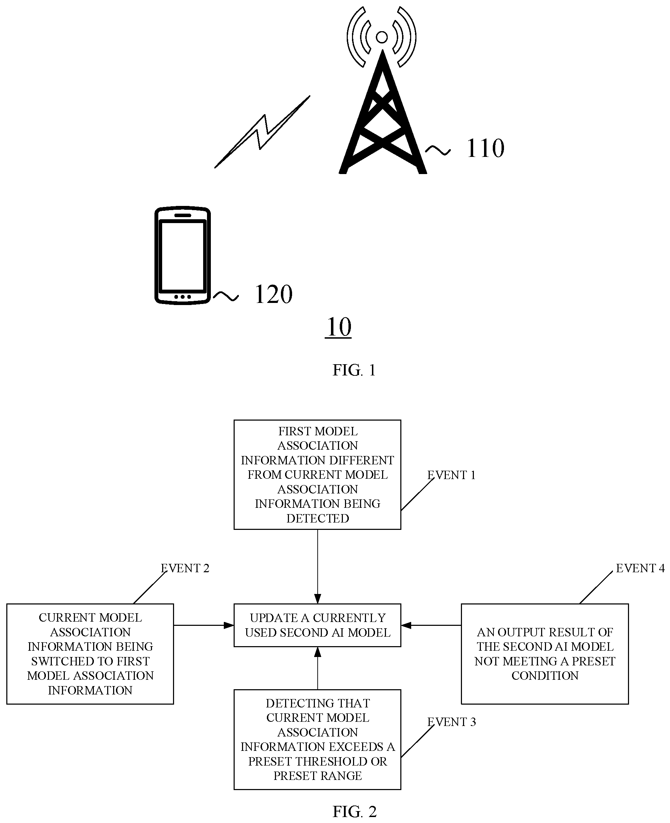

The present disclosure can be applied to a system architecture illustrated in FIG. 1. The communication system 10 illustrated in FIG. 1 may include, but is not limited to: a network device 110 and a terminal device 120. The number and form of devices illustrated in FIG. 1 are for illustration and do not limit embodiments of the present disclosure. For example, there can be multiple terminal devices in actual applications.

A terminal device, also referred to as a user equipment (UE), mobile station (MS), mobile terminal (MT), etc., is a device that provides voice and/or data connectivity to users. For example, the terminal device can be a handheld device with wireless connection capabilities or a vehicle-mounted device. Currently, some examples of terminal devices include: a mobile phone, a tablet computer, a laptop computer, a handheld computer, a mobile internet device (MID), a wearable device, a virtual reality (VR) device, an augmented reality (AR) device, an industrial control wireless terminal, a self-driving wireless terminal, a remote medical surgery wireless terminal, a smart grid wireless terminal, a transportation safety wireless terminal, a smart city wireless terminal, a smart home wireless terminal, etc.

In the present disclosure, the device for implementing the functionality of the terminal device can be the terminal device itself; it can also be a device that can support the terminal device to implement this function, such as a chip or chip module, etc. This device can be installed in the terminal device or used in conjunction with the terminal device. In the technical solution provided in the present disclosure, the technical solution is described with the device for implementing the functionality of the terminal device being the terminal device as an example. The terminal device involved in embodiments of the present disclosure has an AI model, or it can be described as having a deployed AI model. The number of AI models supported by the terminal device is not limited in the present disclosure, and it depends on the factory settings of the terminal device or the actual situation.

In one implementation, the network device can be an access network device, which is a wireless access network (RAN) node (or device) that connects the terminal device to the wireless network, also known as a base station. Currently, some examples of RAN nodes include: a next generation Node B (gNB), a transmission reception point (TRP), an evolved Node B (eNB), a radio network controller (RNC), a Node B (NB), a base station controller (BSC), a base transceiver station (BTS), a home base station (for example, a home evolved Node B or a home Node B (HNB)), a base band unit (BBU), or a wireless fidelity (WiFi) access point (AP), etc. Additionally, in a certain network structure, the network device can include a centralized unit (CU) node, or a distributed unit (DU) node, or a RAN device including both CU and DU nodes. It may be noted that centralized unit node and distributed unit node may also have other names, which are not limited in the present disclosure.

In another implementation, the network device can be a core network device. The core network device is mainly responsible for managing and controlling the entire network, acting as an intermediary to sort the received data and transmit it to the corresponding terminal device or data network (DN). The core network device can also be referred to as a core network node. In the present disclosure, the core network device can be, for example, a network data analytics function (NWDAF) node or a location management function (LMF) node, etc. The NWDAF node is configured to provide network analysis services according to the request data of network services. The LMF node is configured to coordinate and schedule the resources required for the location of the terminal device in a comprehensive manner, and also to provide location services.

In yet another implementation, the network device can be a neural network processing node, which is a node that provides services for the AI model, such as providing model parameters for the AI model.

In the present disclosure, the device for implementing the functionality of the network device can be the network device itself; it can also be a device that can support the network device to implement this function, such as a chip or chip module, etc. This device can be installed in the network device or used in conjunction with the network device. In the technical solution provided in the present disclosure, the technical solution is described with the device for implementing the functionality of the network device being the network device as an example.

It may be understood that the communication system described in embodiments of the present disclosure is to more clearly illustrate the technical solution of the present disclosure and does not limit the technical solution provided in embodiments of the present disclosure. Those skilled in the art know that with the evolution of system architecture and the emergence of new business scenarios, the technical solution provided in embodiments of the present disclosure is also applicable to similar technical problems.

Secondly, relevant names or terms involved in the present disclosure are described to facilitate understanding by those skilled in the art.

### 1. AI Model

An AI model can be configured to implement AI functions and can also be described as a machine learning model. An AI model can be implemented in at least one of the following ways, such as a neural network, decision tree, support vector machine, Bayesian classifier, etc.

Taking a neural network as an example, a neural network is composed of neurons, which include: input parameters, multiplicative coefficients, additive coefficients, activation functions, etc. Common activation functions include: Sigmoid function, hyperbolic tangent (tanh) function, rectified linear unit (ReLU) function, etc.

The parameters of the neural network are optimized by gradient optimization algorithms, which are a class of algorithms for minimizing or maximizing the objective function (also known as the loss function), and the objective function is often a mathematical combination of model parameters and data. For example, given data X and its corresponding label Y, a neural network model f is constructed. With the model, output information can be predicted according to the input and the difference between a predicted value and a true value is calculated, which is the loss function. The purpose of constructing a neural network model is to minimize the value of the loss function as much as possible. The smaller the loss value, the closer the neural network model is to the real situation.

The error backpropagation (BP) algorithm is a common optimization algorithm used to optimize the AI model. The basic idea of the BP algorithm is that the learning process consists of two parts: the forward propagation of signals and the backward propagation of errors. During forward propagation, the input sample is transmitted from the input layer and processed by each hidden layer before being transmitted to the output layer. If the actual output of the output layer does not match the expected output, the process enters the backward propagation stage of errors. For the sake of convenience in description, the backward propagation stage of errors is abbreviated as error backpropagation. During error backpropagation, the output error is propagated backward in some form through the hidden layers to the input layer, and the error is allocated to all units of each layer, thereby obtaining the error signal of each unit of each layer. These error signal serve as the basis for modifying the weight of each unit. This process of weight adjustment of each layer through signal forward propagation and error backward propagation is cyclical. The continuous adjustment of weights is also the learning and training process of the AI model. This process continues until the output error of the AI model is reduced to an acceptable level or until the preset number of learning iterations is reached.

Optimization algorithms for optimizing the AI model can also include gradient descent algorithm, stochastic gradient descent (SGD) algorithm, mini-batch gradient descent algorithm, momentum algorithm, SGD with momentum (Nesteroy), adaptive gradient descent (Adagrad) algorithm, root mean square propagation (RMSProp) algorithm, adaptive moment estimation (Adam) algorithm, etc.

During error backpropagation in the above optimization algorithms, the gradient is obtained by differentiating the current neuron according to the error obtained from the loss function, combined with the learning rate, previous gradients/derivatives/partial derivatives, etc., and the gradient is passed to the upper layer.

The AI model involved in embodiments of the present disclosure refers to an AI model applied in the field of wireless communication technology, which can be used to enhance the throughput of wireless communication systems, reduce processing latency, and increase user capacity. The AI model involved in embodiments of the present disclosure refers to the AI model of the terminal device, thereby enhancing the communication capabilities of the terminal device.

### (1). Attribute Information of AI Model

The attribute information of the AI model is used to describe identifier information, model structure information, model parameters, etc., of the AI model. In other words, the attribute information of the AI model can include at least one of the following: identifier information of the AI model, model structure information of the AI model, or model parameters of the AI model.

The identifier information is used to identify the AI model, for example, it can be a model identifier (ID). Different model IDs identify different AI models, and different AI models have different model IDs. The model structure information is used to describe the model structure, for example, it can be a neural network, decision tree, or structure information about neurons and layers in the model. Different model structures can be considered as different AI models. A model parameter can include at least one type of parameter, such as activation functions, multiplicative coefficients, additive coefficients, etc. Different model parameters can be considered as different AI models. For example, if two AI models have different activation functions but all other model parameters are the same, they are still considered as different AI models.

It may be noted that in embodiments of the present disclosure, the name "attribute information of an AI model" is used for illustrative purposes. It can also be described as model information of an AI model, feature information of an AI model, or basic information of an AI model, etc.

### 2. Model Association Information

In embodiments of the present disclosure, model association information is used to describe information that has an association relationship with the AI model, or information that has an association relationship with the attribute information of the AI model. Changes in model association information may lead to changes in the AI model. The association relationship between model association information and AI models can be a one-to-one relationship, that is, one piece of model association information is associated with one AI model. Alternatively, the association relationship between model association information and AI models can also be a many-to-one relationship, that is, multiple model association information can be associated with one AI model. Alternatively, the association relationship between model association information and AI models can also be a one-to-many relationship, that is, one piece of model association information can be associated with multiple AI models.

Model association information may include, but is not limited to, at least one of the following: public land mobile network (PLMN) information, operator identifier information, network device manufacturer identifier information, tracking area identity (TAI) information, steering of roaming (SOR)information, user equipment route selection policy (URSP) information, operating frequency information, cell information, reference signal information associated with cell information, channel quality information, timestamp information, terminal device information.
1). PLMN information is used to describe a cellular mobile communication network of a specific technology standard operated by a particular operator in a specific geographic area. For example, PLMN information is used to describe the 5G technology standard network of operator 1 in the home area of the terminal device. For another example, PLMN information is used to describe the 5G technology standard network of operator 2 in the visited area of the terminal device.
2). Operator identifier information is used to identify the operator, for example, it can be an operator to which the terminal device is subscribed, or an operator to which the terminal device currently belongs, etc.
3). Network device manufacturer identifier information is used to identify a network device manufacturer, for example, it can be a manufacturer of the base station or a manufacturer of a core network device, etc.
4). TAI information is used to identify TAI, which can be represented as TAI = PLMN + tracking area code (TAC). Tracking area (TA) is a concept established for the location management of the terminal device. When the terminal device is in an idle state, the core network device can know the TA where the terminal device is located, and when paging the terminal device in an idle state, paging is performed in all cells within the TA where the terminal device is registered. TA is a cell-level configuration, multiple cells can be configured with the same TA, and one cell belongs to one TA.
5). SOR information is used by the home PLMN to guide the terminal device from one network to another. SOR is a technology that encourages roaming terminal devices to roam to a preferred roaming network through the home PLMN. For example, the terminal device is registered on one PLMN, and for some reason, the home PLMN of the terminal device wishes the terminal device to be registered on another PLMN.
6). URSP information is used to describe a routing selection strategy of the terminal device. This strategy describes a correspondence between applications on the terminal device and network slices, and the terminal device can select network slices for applications according to URSP.
7). Operating frequency information is used to describe the frequency that the terminal device will use, is currently using, or can use, and can include at least one of the following: frequency number, band number, etc.
8). Cell information is used to describe the serving cell information of the terminal device, and can include at least one of the following: cell group information, serving cell identifier information, physical cell identifier information, TRP identifier information, BWP identifier. The cell group information can include a cell group identifier, which is used to identify a cell group to which the serving cell belongs. The serving cell identifier information can include a serving cell identifier, which is used to identify the serving cell. The physical cell identifier information can include a physical cell identifier (PCI), which is used to identify a logical cell of the serving cell. The TRP identifier information can include, but is not limited to, at least one of the following: control-resource set (CORESET) identifier, CORESET pool identifier, group identifier of CORESET, TCI state pool identifier, TCI state identifier, reference signal resource identifier, reference signal resource set identifier. The BWP identifier is used to identify the BWP.
9). Reference signal information associated with cell information is used to describe a reference signal associated with cell information, and can include at least one of the following: the number of reference signal resources, a set of reference signal resources, an index of a reference signal resource, a pattern of a reference signal, a repetition parameter value of a reference signal (for example, repetition off or repetition on, where repetition off indicates that the repetition transmission of a reference signal is not enabled, and repetition on indicates that the repetition transmission of a reference signal is enabled). The reference signal referred to here is a downlink reference signal, for example, it can be a synchronization signal block (SSB) or a channel state information reference signal (CSI-RS).
10). Channel quality information is used to describe the channel quality. Channel quality information can include at least one of the following: signal to interference plus noise ratio (SINR), reference signal receiving power (RSRP), received signal strength indicator (RSSI), reference signal receiving quality (RSRQ), or channel quality indication (CQI). For example, the RSRP included in the channel quality information can be RSRP of layer 1 (L1) or RSRP of layer 3 (L3). SINR can be SINR of L1 or SINR of L3. The terminal device can measure a reference signal sent by the network device to obtain channel quality information. The process of the terminal device obtaining channel quality information by measuring the reference signal is not limited in the present disclosure.
11). Timestamp information is used to describe a time interval of the AI model, for example, a training time interval or an application time interval, etc. It can be understood that the timestamp information is a validity period of the AI model. The network device can broadcast the timestamp information of the AI model.
12). Terminal device information is used to describe identifier information of the terminal device, and can include at least one of the following: identifier information of an equipment manufacturer of the terminal device, identifier information of the terminal device, etc. The identifier information of the equipment manufacturer of the terminal device is used to identify the manufacturer of the terminal device, for example, the brand of the mobile phone. The identifier information of the terminal device is used to uniquely identify the terminal device, and can include, but is not limited to, international mobile subscriber identity (IMSI), subscription permanent identity (SUPI), subscription concealed identity (SUCI), etc.

Furthermore, the identifier information of the equipment manufacturer of the terminal device and the identifier information of the terminal device are associated with the AI model. For example, AI model 1 is applicable to mobile phones of brand A, and AI model 2 is applicable to mobile phones of brand B. The network device can broadcast the identifier information of the equipment manufacturer of the terminal device applicable to the AI model, or broadcast the identifier information of the terminal device applicable to the AI model. For example, the network device can broadcast that AI model 1 is applicable to mobile phones of brand A.

The model association information is for illustrative purposes and does not limit embodiments of the present disclosure. The model association information may include other types of information. The information included in the model association information can change with application scenarios, such as adding or reducing certain information.

3. Attribute Information of AI Model Having Association Relationship with Model Association Information.

The association relationship between the attribute information of the AI model and the model association information actually means the association relationship between the AI models and the model association information. Specifically, it refers to the association relationship between the attribute information of at least one AI model and the model association information under different environments or different conditions. This association relationship can be a one-to-one relationship, a many-to-one relationship, or a one-to-many relationship.

For example, the model association information is the operator identifier information, and the association relationship between the attribute information of two AI models and two operator identifiers is shown in Table 1 below.

**Table 1**

| Model ID of AI Model | Operator Identifier Information | Model Structure Information / Model Parameter |
|---|---|---|
| 1 | Operator Identifier A | Model Parameter 1 |
| 2 | Operator Identifier B | Model Parameter 2 |

In Table 1, the model IDs of the two AI models are 1 and 2, respectively. Model ID 1 and Model Parameter 1 are associated with operator identity A, and model ID 2 and model parameter 2 are associated with operator identity B.

In one implementation, the association relationship between the attribute information of the AI model and the model association information is indicated by the network device. For example, the network device can indicate the association relationship between the attribute information of the AI model and the model association information through higher-layer signaling, downlink control information (DCI), or broadcast messages. For example, if the terminal device supports two AI models, the network device can indicate the association relationship between the two AI models and their respective model association information. It can be understood that when the network device indicates the association relationship, the network device can implicitly indicate the AI model attribute information and the model association information that have an association relationship. That is, the network device can indicate the attribute information of the AI model and the model association information associated with the attribute information. The network device indicates the association relationship to ensure that both the network device and the terminal device have a consistent understanding of the association relationship between the AI model and the model association information of the terminal device.

In another implementation, the association relationship between the attribute information of the AI model and the model association information is determined by the terminal device. That is, the terminal device maintains the association relationship. Optionally, the terminal device can report the determined association relationship to the network device to ensure that both the network device and the terminal device have a consistent understanding of the association relationship between the AI model and the model association information of the terminal device.

In yet another implementation, the association relationship between the attribute information of the AI model and the model association information is predefined by protocol. The protocol predefines the association relationship to ensure that both the network device and the terminal device have a consistent understanding of the association relationship between the AI model and the model association information of the terminal device.

Below is a detailed description of method for updating an AI model provided in embodiments of the present disclosure.

Please refer to FIG. 2, which is a schematic diagram of a method for updating an AI model provided in embodiments of the present disclosure. Taking the terminal device executing the method illustrated in FIG. 2 as an example, the method illustrated in FIG. 2 may include at least one of the following steps (1) to (4).

Step (1), update a currently used second AI model in response to first model association information different from current model association information being detected.

Step (2), update a currently used second AI model in response to current model association information being switched to first model association information.

Step (3), update a currently used second AI model in response to detecting that current model association information exceeds a preset threshold or preset range.

Step (4), update a currently used second AI model in response to an output result of the second AI model not meeting a preset condition.

The above steps (1) to (4) can be executed individually, or two or more of them can be executed. For example, when the first model association information different from the current model association information is detected, and the output result of the currently used second AI model does not meet the preset condition, the second AI model is updated. In other words, the above four steps have an "and/or" relationship.

Updating the second AI model may also be understood as updating (or switching) the second AI model to other AI models, or deactivating the second AI model and activating a new AI model, or updating attribute information of the second AI model, or training the second AI model, or fine tuning the second AI model, or adapting the second AI model, or testing the second AI model, or supervising the second AI model, or checking/verifying the second AI model.

FIG. 2 can be understood as follows: when at least one of the following events occurs, the terminal device can update the currently used second AI model: Event 1, first model association information different from current model association information is detected. Event 2, current model association information is switched to first model association information. Event 3, current model association information is detected to exceed a preset threshold or preset range. Event 4, an output result of the second AI model does not meet a preset condition.

Below is a description of the AI model update under these four events, respectively.

Event 1, first model association information different from the current model association information is detected.

Optionally, the current model association information can be understood as the currently used model association information, for example, the currently used URSP information, or the currently used operating frequency information, etc. Correspondingly, the first model association information can be understood as the model association information that will be used, which can be indicated through first signaling from the network device, or determined autonomously by the terminal device.

Optionally, the current model association information can be understood as the channel quality information currently measured. Correspondingly, the first model association information can be understood as the channel quality information measured next time.

Optionally, in a case that the first model association information is indicated through the first signaling sent by the network device, the current model association information may be understood as model association information used before the first signaling is received. Accordingly, the first model association information may be indicated by the network device through the first signaling.

Reference of the information included in the current model association information and the first model association information can be made to the detailed description of the information included in the model association information mentioned above, which will not be repeated here.

In one implementation, Event 1 can be understood as the terminal device detecting first network-related information different from the current network-related information. The current network-related information can be understood as the information under the current network coverage area, and the current network coverage area can be understood as a network coverage area where the terminal device is currently located. The first network-related information can be understood as the information under the first network coverage area, and the first network coverage area can be understood as a new network coverage area.

Optionally, the terminal device detects the first operator identifier information. For example, the first signaling indicates the first operator identifier information, thereby allowing the terminal device to detect that the first operator identifier information is different from the current operator identifier information.

Optionally, the terminal device detects the first PLMN information. For example, the first signaling indicates the first PLMN information, thereby allowing the terminal device to detect that the first PLMN information is different from the current PLMN information.

Optionally, the terminal device detects the first network device manufacturer identifier information. For example, the first signaling indicates the first network device manufacturer identifier information, thereby allowing the terminal device to detect that the first network device manufacturer identifier information is different from the current network device manufacturer identifier information.

Optionally, the terminal device detects the first TAI information. For example, the first signaling indicates the first TAI information, thereby allowing the terminal device to detect that the first TAI information is different from the current TAI information.

Optionally, the terminal device detects the first SOR information. For example, the first signaling indicates the first SOR information, thereby allowing the terminal device to detect that the first SOR information is different from the current SOR information.

Optionally, the terminal device detects the first URSP information. For example, the first signaling indicates the first URSP information, thereby allowing the terminal device to detect that the first URSP information is different from the current URSP information.

In another implementation, Event 1 can be understood as the terminal device detecting the first operating frequency information, that is, detecting new operating frequency information. For example, the first signaling indicates the first operating frequency information.

In yet another implementation, Event 1 can be understood as the terminal device detecting the first cell information, that is, detecting new cell information. For example, the first signaling indicates the first cell information.

In yet another implementation, Event 1 can be understood as the terminal device detecting the reference signal information associated with the first cell information, that is, detecting a new reference signal pattern.

When the terminal device detects that Event 1 has occurred, the terminal device updates the currently used second AI model. Optionally, the terminal device can update the currently used second AI model to the first AI model. The attribute information of the first AI model has an association relationship with the first model association information; and the attribute information of the second AI model has an association relationship with the current model association information. In other words, the terminal device updates the currently used second AI model to the first AI model, which has an association relationship with the first model association information.

The terminal device can update the second AI model to the first AI model in the following two cases.

Case 1: when the first AI model is different from the second AI model, and the terminal device supports the first AI model, the second AI model is updated to the first AI model. In other words, when updating the AI model, the terminal device not only considers whether the AI models are different, but also whether the terminal device supports the new AI model, to avoid the situation where the updated AI model is unavailable.

Case 2: when the first AI model is different from the second AI model, the terminal device supports the first AI model, and the state of the first AI model is not the deactivation state, the second AI model is updated to the first AI model. In other words, besides considering the differences between AI models and whether the terminal device supports the new AI model, the terminal device also considers whether the new AI model is in the deactivation state. If the new AI model is not in the deactivation state, the new AI model can be updated to; and if the new AI model is in the deactivation state, the new AI model is unable to be updated to. Whether the state of the first AI model is the deactivation state or not can be indicated by the network device or determined autonomously by the terminal device. For example, after the terminal device updates from AI model 1 to AI model 2, the terminal device deactivates AI model 1. When detecting the first model association information, the terminal device determines that AI model 2 can be updated to AI model 1. However, since AI model 1 is in the deactivation state, the terminal device will not update AI model 2 to AI model 1. The change of the state of the AI model can be determined by the terminal device or indicated by the network device.

The above Case 1 and Case 2 are for the situation where the terminal device supports the first AI model. If the terminal device does not support the first AI model, the following Method 1 or Method 2 can be adopted.

Method 1: when the first AI model is different from the second AI model, and the terminal device does not support the first AI model, a target AI model is selected from AI models supported by the terminal device according to the first model association information. The first AI model or the second AI model is updated to the target AI model. In other words, when the terminal device does not support the first AI model, the terminal device selects a suboptimal AI model, which is the target AI model. In other words, when the terminal device finds that the terminal device does not support the first AI model, the terminal device can update the first AI model or the second AI model to the target AI model.

For example, the terminal device supports AI model 1 and AI model 2. The terminal device moves from the network of operator 1 to the network of operator 3 (that is, the AI model associated with the current model association information is model 1), and the AI model associated with the first model association information is AI model 3. However, the terminal device does not support AI model 3. Therefore, the terminal device selects AI model 2 as the target AI model. AI model 2 is associated with the network of operator 2 instead of the network of operator 3. Then, after the terminal device updates AI model 1 to AI model 2, the terminal device can establish the association relationship between the attribute information of AI model 2 and the first model association information.

The target AI model meeting the similarity condition can include at least one of the following.
1). A difference between a model identifier of the first AI model and a model identifier of the target AI model is less than or equal to a first threshold. In other words, the model ID of the target AI model is closest to the model ID of the first AI model. For example, the first threshold is 1, the model ID of the first AI model is 1, and a range of model IDs of AI models supported by the terminal device is {2,3}. Therefore, an AI model with a model ID of 2 is the target AI model. Furthermore, if the model ID of the second AI model is 2, then the second AI model may not be updated, or the attribute information of the second AI model may be updated to better adapt to changes in the communication environment.
2). The first model association information is the same as or has a similarity greater than a second threshold with model association information associated with the target AI model. The greater the similarity between the first model association information and the model association information associated with the target AI model, the higher the match degree between the first model and the target AI model, and the closer the two AI models are. It may be noted that the second threshold may be different for different types of model association information. For example, when the model association information is TAI information, the second threshold can be 80%; and when the model association information is URSP information, the second threshold can be 90%. For model association information that includes multiple types of information, if the similarity of one type of model association information is greater than its corresponding second threshold, it can be considered that the overall similarity is greater than the second threshold. For example, the first model association information includes both first TAI information and first URSP information. If the similarity between the first TAI information and the TAI information associated with the target AI model is greater than the second threshold, then it is considered that the similarity between the first model association information and the model association information associated with the target AI model is greater than the second threshold.
3). The target AI model is an AI model associated with preset cell information. Optionally, the preset cell information is included in the configured or activated cell information, for example, the target AI model is an AI model associated with a default BWP in BWPs activated by the network device. Optionally, the preset cell information is cell information associated with a target TCI state, and the target TCI state is indicated, configured, or activated by a second signaling. The time difference between the reception time of the second signaling and the current system time is less than a third threshold. In other words, the target TCI state is a TCI state indicated, configured, or activated by the most recent second signaling from the network device. For example, the second signaling is a higher-layer signaling, and the target TCI state is a TCI state configured by the higher-layer signaling. For another example, the second signaling is a medium access control-control element (MAC-CE) signaling, and the target TCI state is a TCI state activated by the MAC-CE signaling. The target TCI state can also be understood as the most recently used TCI state. Therefore, the cell information associated with the target AI model can be understood as the cell information associated with the target TCI state. Optionally, the preset cell information includes the default cell identifier in the neighboring cell list, and thus the target AI model is an AI model associated with the default cell identifier in the neighboring cell list configured by the network device for the terminal device.
4). The target AI model is an AI model that was used most frequently in a second preset time period before the second AI model being updated or a last used AI model. The specific range of the second preset time period is not limited in embodiments of the present disclosure. The last used AI model before the second AI model being updated refers to an AI model used before using the second AI model.

Method 2: when the first AI model is different from the second AI model, and the terminal device does not support the first AI model, the terminal device sends a first request message to the network device. The first request message indicates attribute information of the third AI model. In other words, when the terminal device does not support the first AI model, the terminal device sends the first request message to the network device that indicates the attribute information of the third AI model, thereby indicating that the terminal device requests to use the third AI model. The third AI model can be different from the first AI model. The terminal device receives a first response message from the network device. If the first response message indicates acknowledgement information, the first AI model or the second AI model is updated to the third AI model. Conversely, if the first response message indicates negative acknowledgement information, the AI model update is stopped, or the terminal device sends the first request message again. In this case, the first request message indicates that the terminal device requests to use attribute information of another AI model (that is, an AI model different from the third AI model). The terminal device waits to receive acknowledgement or negative acknowledgement information from the network device.

Optionally, the first request message does not specify attribute information of any AI model, and the first request message is used to request the network device to indicate attribute information of an AI model. When the network device receives the first request message, the network device sends a first response message to the terminal device, and the first response message indicates attribute information of a new AI model. When the terminal device receives the first response message, the terminal device can update the second AI model to the new AI model. Furthermore, the terminal device can establish the association relationship between the new AI model and the first model association information.

It can be understood that before or after the terminal device updates to the first AI model, the terminal device detects that the terminal device does not support the first AI model, and then the terminal device sends a first request message to the network device to request to use the third AI model or the target AI model. When the terminal device receives a first response message indicating acknowledgement information, the terminal device updates the first AI model or the second AI model to the third AI model or the target AI model. For the case where the terminal device detects that the terminal device does not support the first AI model before updating to the first AI model, the terminal device updates the second AI model to the third AI model or the target AI model when receiving a first response message indicating acknowledgement information. For the case where the terminal device detects that the terminal device does not support the first AI model after updating to the first AI model, the terminal device updates the first AI model to the third AI model or the target AI model when receiving a first response message indicating acknowledgement information.

The above Case 1 and Case 2, as well as Method 1 and Method 2, are for situations where the first AI model is different from the second AI model. If the first AI model is the same as the second AI model, the terminal device updates the association relationship between the current model association information and the attribute information of the second AI model to the association relationship between the first model association information and the attribute information of the second AI model. Thus, the association relationship between the model association information and the attribute information of the AI model can be updated in real time.

The above Method 1 and Method 2 are for the situation where the terminal device does not support the first AI model. If the terminal device detects at least one of the following defects 1 to 3 before or after updating the second AI model to the first AI model, a target AI model is selected from AI models supported by the terminal device according to the first model association information.

Defect 1: an output result of the first AI model does not meet a preset condition, that is, the output result of the first AI model does not meet performance requirements. In other words, the output result of the first AI model does not meet the performance requirements. In this case, the first AI model is updated to the target AI model. Reference of the similarity condition met by the target AI model can be made to the specific description in Method 1 above, which will not be repeated here.

Defect 2: the state of the first AI model is the deactivation state, that is, the first AI model is indicated by the network device to be in the deactivation state or the terminal device determines that the state of the first AI model is the deactivation state. In this case, the first AI model or the second AI model is updated to the target AI model. If the terminal device has already detected that the state of the first AI model is the deactivation state before updating the second AI model to the first AI model, the second AI model is updated to the target AI model. If the terminal device detects that the state of the first AI model is the deactivation state after updating the second AI model to the first AI model, the first AI model is updated to the target AI model.

Defect 3: the first AI model is different from an AI model indicated by AI model indication information. The AI model indication information is sent by the network device, which is different from the first signaling and the second signaling. Optionally, the network device can send the AI model indication information to the terminal device when the terminal device accesses. If the terminal device detects that the AI model indicated by the network device is not the first AI model before updating the second AI model to the first AI model, then the second AI model is updated to the target AI model. If the terminal device detects that the AI model indicated by the network device is not the first AI model after updating the second AI model to the first AI model, then the first AI model is updated to the target AI model.

For the above defects 1 to 3, in addition to selecting the target AI model, the terminal device can also adopt Method 2, sending a first request message to the network device. The first request message indicates the attribute information of the third AI model. When receiving a first response message indicating acknowledgement information from the network device, the first AI model or the second AI model can be updated to the third AI model according to the acknowledgement information. Alternatively, the first request message is used to request the network device to indicate attribute information of an AI model. When receiving a first response message indicating the attribute information of a new AI model, the first AI model or the second AI model can be updated to the new AI model.

From the above Method 1, Method 2, and defects 1 to 3, it can be known that when the first AI model is unavailable, the first AI model can be updated to the third AI model or the target AI model; or the second AI model can be updated to the third AI model or the target AI model. The unavailable situations of the first AI model can include, but are not limited to, at least one of the following situations. (1) The terminal device does not support the first AI model. (2) An output result of the first AI model does not meet a preset condition. (3) A state of the first AI model is the deactivation state. (4) The first AI model is different from an AI model indicated by AI model indication information.

Optionally, for the above situations (1) to (4), the terminal device can also update the second AI model to an AI model determined by measuring a reference signal sent by the network device. For example, the terminal device can measure the reference signal sent by the network device in the first cell to obtain a measurement result (for example, including channel quality information), and update the second AI model to an AI model determined according to the measurement result. Alternatively, the terminal device can also update the first AI model to an AI model determined by measuring the reference signal sent by the network device.

Event 2, current model association information is switched to first model association information.

Reference of the current model association information and the first model association information in Event 2 can be made to the specific description of the current model association information and the first model association information in Event 1, which will not be repeated here.

The difference between Event 1 and Event 2 is that in Event 1, the update of the AI model is undated when model association information different from the current model association information is detected, while in Event 2, the update of the AI model is triggered when the current model association information is switched to the first model association information. It can be understood that in Event 1, new model association information is detected, and new model association information may not have been switched to; while in Event 2, the new model association information is switched to.

For example, the terminal device switches from the current operating frequency to the first operating frequency. For another example, the terminal device switches from the current serving cell to the first cell. For another example, the terminal device switches from the current cell group to the first cell group. For another example, the terminal device switches from the current PCI to the first PCI. For another example, the terminal device switches from communicating with the current TRP to communicating with the first TRP. For another example, the terminal device switches from the current BWP to the first BWP.

When the terminal device detects that Event 2 has occurred, the terminal device updates the currently used second AI model. Optionally, the terminal device can update the currently used second AI model to the first AI model. Reference of the process of the terminal device updating the currently used second AI model to the first AI model can be made to the specific description of Event 1 above, which will not be repeated here.

Event 3, current model association information is detected to exceed a preset threshold or preset range.

Exceeding the preset threshold can be greater than the preset threshold or less than the preset threshold. Exceeding the preset range can be greater than the maximum value in the preset range or less than the minimum value in the preset range.

Optionally, the current model association information in Event 3 can include the information mentioned in Event 1 above, and can also include a current BWP switching timer. If the current BWP switching timer times out, the terminal device can update the second AI model. For example, once the BWP switching timer times out, the second AI model is updated immediately. In this case, the timing duration of the BWP switching timer is the preset threshold.

Optionally, the current model association information is the current channel quality information. If the current channel quality information exceeds the preset threshold or preset range, the terminal device can update the second AI model. For example, if the current channel quality information is the current SINR, and if the current SINR is less than the preset threshold or less than the minimum value in the preset threshold range, the second AI model is updated immediately.

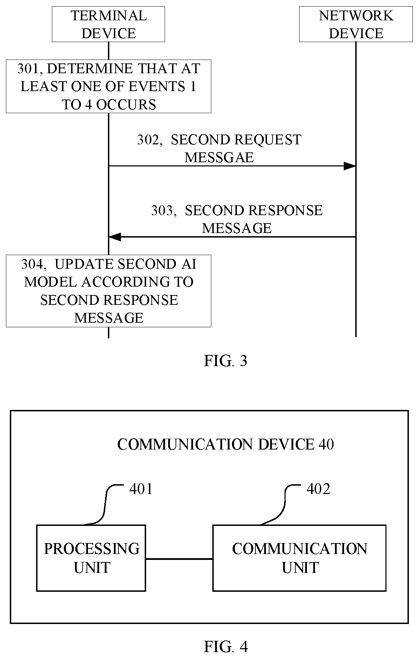

For Event 3, in one implementation, the terminal device can update the second AI model to the target AI model. Reference of the process of the terminal device selecting the target AI model can be made to the specific description of Method 1 in Event 1 above, which will not be repeated here. In another implementation, the embodiment illustrated in FIG. 3 can be adopted to update the second AI model to a new AI model. In yet another implementation, the terminal device can update the second AI model to an AI model determined by measuring a reference signal sent by the network device. For example, the terminal device can measure the reference signal sent by the network device in the first cell to obtain a measurement result (for example, including channel quality information), and update the second AI model to an AI model determined according to the measurement result.

Event 4, an output result of the currently used second AI model does not meet a preset condition.

When the output result of the currently used second AI model does not meet the preset condition, that is, the output result of the second AI model does not meet performance requirements, the second AI model can be updated so that the updated AI model can meet the performance requirements. For example, if the output result of the second AI model includes the value of the loss function, and this value exceeds an available performance range, the terminal device will update the second AI model.

For Event 4, in one implementation, the terminal device can update the second AI model to the target AI model. Reference of the process of the terminal device selecting the target AI model can be made to the specific description of Method 1 in Event 1 above, which will not be repeated here. In another implementation, the embodiment illustrated in FIG. 3 can be adopted to update the second AI model to a new AI model. In yet another implementation, the terminal device can update the second AI model to an AI model determined by measuring a reference signal sent by the network device.

For at least one of the above Events 1 to 4, after the terminal device updates the second AI model, the terminal device can deactivate the second AI model to avoid using two or more AI models simultaneously, reducing the processing load of the terminal device.

It may be noted that if none of the above Events 1 to 4 occur, the second AI model will not be updated.

In the embodiment illustrated in FIG. 2, several events that trigger the update of the AI model of the terminal device are provided. When at least one of these events occurs, the terminal device can quickly trigger the update of the currently used second AI model to better adapt to changes in the communication environment, thereby helping to improve communication efficiency.

Please refer to FIG. 3, which is a schematic diagram of a method for updating an AI model provided in embodiments of the present disclosure. The method specifically includes the following.

At 301, the terminal device determines that at least one of Events 1 to 4 occurs.

Reference of the implementation process of the operation at 301 can be made to the specific description of Events 1 to 4 in the embodiment illustrated in FIG. 2 above, which will not be repeated here. When the terminal device determines that at least one of Events 1 to 4 occurs, the terminal device can directly update the second AI model, or execute operations at 302 to 304.

At 302, the terminal device sends a second request message to the network device. Correspondingly, the network device receives the second request message from the terminal device.

The second request message can include, but is not limited to, at least one of the following.
A. use of an AI model suggested by the terminal device. The use of the AI model suggested by the terminal device can be used by the network device to provide corresponding reference signal resources according to this use, for example, to provide corresponding reference signal resources. The use of the AI model can include, but is not limited to: training, inference, update, switch, activation, deactivation, monitoring, etc. Training can be divided into initial training or retraining, and training can involve training a model parameter of the AI model, etc.
B. attribute information of an AI model suggested by the terminal device. The attribute information of the AI model suggested by the terminal device can be used by the network device to determine whether to agree to the terminal device using this AI model. The attribute information of the AI model suggested by the terminal device includes, for example, at least one of the following: a model ID of an AI model suggested by the terminal device, model structure information suggested by the terminal device, or model parameters suggested by the terminal device, etc.
C. an AI model update duration suggested by the terminal device, which indicates the duration of the AI model update determined by the terminal device. The AI model update duration suggested by the terminal device can be used by the network device to determine whether to agree to the terminal device using this AI model. Optionally, the suggested AI model update duration can include at least one of the following durations: a network switching duration, a cell switching duration, a BWP switching duration, or a beam switching duration.
D. reference signal information suggested by the terminal device, which indicates to the network device how to send a reference signal suggested by the terminal device. The reference signal information suggested by the terminal device can include, but is not limited to, at least one of the following: the number of reference signal resources, a set of reference signal resources, an index of a reference signal resource, a pattern of a reference signal, a repetition parameter value of a reference signal (for example, repetition off or repetition on, where repetition off indicates that the repetition transmission of a reference signal is not enabled, and repetition on indicates that the repetition transmission of a reference signal is enabled), a reporting threshold of a reference signal, etc.
E. the number of receive beams expected by the terminal device, which indicates to the network device how many transmit beams to use to send a reference signal expected by the terminal device to match the number of receive beams of the terminal device.

Furthermore, an uplink resource corresponding to the second request message can include, but is not limited to, at least one of the following.
1). A pre-configured periodic physical uplink channel resource, for example, a pre-configured periodic physical uplink control channel (PUCCH) resource.
2). an uplink grant resource used most frequently in a first preset time period before the second request message being sent. The specific value range of the first preset time period is not limited in embodiments of the present disclosure. The first preset time period can be the same as or different from a second preset time period.
3). a last used uplink grant resource.
4). a next available uplink grant resource. The next available uplink grant resource can also be described as the most recent available uplink grant resource or an upcoming uplink grant resource. "Available" means that the most recent uplink grant resource can carry the second request message. The next available uplink grant resource can be a dynamic grant resource or a configured grant resource.
5). a random access resource associated with the first model association information. Optionally, the network device pre-configures an association relationship between random access resources and model association information. The UE determines to use a random access resource associated with the first model association information according to the detected first model association information, and sends the second request message.
6). A random access resource corresponding to reference signal information associated with the first model association information, for example, a random access channel (RACH) resource corresponding to an SSB associated with the first cell, the terminal device determines to use the RACH resource corresponding to the SSB associated with the first cell according to the detected SSB associated with the first cell, and sends the second request message.

At 303, the network device sends a second response message to the terminal device. Correspondingly, the terminal device receives the second response message from the network device.

The second response message is used to respond to the second request message. Corresponding to the second request message, the second response message can include, but is not limited to, at least one of the following.

A1. Reference signal information matching the use of the AI model suggested by the terminal device. Information A1 corresponds to the above information A. In other words, whichever use of the AI model the terminal device requests, the network device provides corresponding reference signal information to the terminal device.

B1. Acknowledgement information or negative acknowledgement information. Information B1 corresponds to the above information B. Information B is the attribute information of the AI model suggested by the terminal device. For example, if the terminal device suggests using AI model 4, and if the network device agrees to the terminal device using AI model 4, then the second response message includes acknowledgement information, indicating that the network device agrees to the terminal device using the requested AI model. If the network device disagrees with the terminal device using AI model 4, then the second response message includes negative acknowledgement information, indicating that the network device disagrees with the terminal device using the requested AI model.

C1. A designated AI model update duration, that is, an AI model update duration designated by the network device. Optionally, the designated AI model update duration can include at least one of the following durations: a network switching duration, a cell switching duration, a BWP switching duration, or a beam switching duration. For example, when the terminal device detects a first operator network, and the second request message includes attribute information of a suggested AI model corresponding to the first operator network, the network device determines the designated AI model update duration according to the second request message. The designated AI model update duration can be greater than or equal to a duration required for the terminal device to complete the switch to the first operator network. Information C1 can correspond to or not correspond to the above information C in the second request information. In other words, the network device can determine the designated AI model update duration according to the AI model update duration suggested by the terminal device; or the network device can also determine the designated AI model update duration according to other information in the second request message.

D1. Reference signal information of a reference signal sent by the network device. The reference signal sent by the network device can match the reference signal information suggested by the terminal device, that is, the network device sends the reference signal as suggested by the terminal device. Alternatively, the reference signal sent by the network device may not match the reference signal information suggested by the terminal device, that is, the network device does not send the reference signal according to the suggestion of the terminal device.

At 304, the terminal device updates the second AI model according to the second response message.

For the case where the second response message includes information A1 or D1, the terminal device can measure the reference signal according to the reference signal information to obtain channel quality information.

Optionally, the terminal device further updates the second AI model to an AI model associated with the channel quality information according to the channel quality information. Alternatively, the terminal device can update the association relationship between the channel quality information and the attribute information of the AI model associated with the channel quality information according to the channel quality information.

Optionally, when information A1 or information D1 includes a reporting threshold of a reference signal, the terminal device further selects target channel quality information greater than or equal to the reporting threshold from the channel quality information, and determines a reference signal resource corresponding to the target channel quality information. The terminal device may report the target channel quality information and the reference signal resource corresponding to the target channel quality information to the network device. Alternatively, the terminal device may update, according to the target channel quality information, an association relationship between the channel quality information and attribute information of an AI model associated with the channel quality information.

Optionally, when the second response message includes acknowledgement information, the terminal device updates the second AI model to an AI model suggested by the terminal device. When the second response message includes negative acknowledgement information, the terminal device can stop the AI model update, or the terminal device can send the second request message to the network device again, and in this case the second request message can indicate attribute information of another AI model.

In the embodiment illustrated in FIG. 3, when at least one of Events 1 to 4 is triggered, the terminal device can quickly update the currently used second AI model through interaction with the network device to better adapt to changes in the communication environment, thereby helping to improve communication efficiency.

As an optional embodiment, after the terminal device updates to the first AI model, the terminal device can also execute operations at 302 and 303, and update the first AI model according to the second response message. The process of the terminal device updating the first AI model according to the second response message is similar to the process of updating the second AI model according to the second response message, which will not be repeated here.

Please refer to FIG. 4, which is a schematic diagram of a communication device provided in embodiments of the present disclosure. The communication device 40 can be a terminal device, or it can be an apparatus matched with the terminal device. As illustrated in FIG. 4, the communication device 40 includes a processing unit 401 and a communication unit 402.

In one implementation, the processing unit 401 is configured to update a currently used second AI model in response to first model association information different from current model association information being detected; and/or update a currently used second AI model in response to current model association information being switched to first model association information; and/or update a currently used second AI model in response to detecting that current model association information exceeds a preset threshold or preset range; and/or update a currently used second AI model in response to an output result of the second AI model not meeting a preset condition.

Optionally, the processing unit 401 is specifically configured to update the currently used second AI model to a first AI model in response to the first model association information different from the current model association information being detected; or update the currently used second AI model to a first AI model in response to the current model association information being switched to the first model association information. Attribute information of the first AI model has an association relationship with the first model association information, and attribute information of the second AI model has an association relationship with the current model association information.

Optionally, the first model association information includes at least one of the following: first operator identifier information, first public land mobile network (PLMN) information, first network device manufacturer identifier information, first tracking area identity (TAI) information, first steering of roaming (SOR) information, first user equipment route selection policy (URSP) information, first operating frequency information, first cell information, reference signal information associated with the first cell information, first channel quality information, first timestamp information, or first terminal device information; and

Optionally, the first cell information includes at least one of the following: first cell group information, first serving cell identifier information, first physical cell identifier information, first transmission reception point (TRP) identifier information, or first bandwidth part (BWP) identifier.

Optionally, the attribute information of the first AI model includes at least one of the following: a model identifier of the first AI model, model structure information of the first AI model, or a model parameter of the first AI model.

Optionally, the processing unit 401 is specifically configured to update the currently used second AI model to the first AI model in response to the first AI model being different from the second AI model and a terminal device supporting the first AI model.

Optionally, the processing unit 401 is further configured to select a target AI model from AI models supported by the terminal device according to the first model association information in response to the first AI model being different from the second AI model and the terminal device not supporting the first AI model, the target AI model meeting a similarity condition; and update the first AI model or the second AI model to the target AI model.

Optionally, the processing unit 401 is further configured to send a first request message to a network device in response to the first AI model being different from the second AI model and the terminal device not supporting the first AI model, where the first request message indicates attribute information of a third AI model; receive a first response message from the network device; and update the first AI model or the second AI model to the third AI model in response to the first response message indicating acknowledgement information.

Optionally, the processing unit 401 is further configured to update the association relationship between the current model association information and the attribute information of the second AI model to an association relationship between the first model association information and the attribute information of the second AI model in response to the first AI model being the same as the second AI model.

Optionally, the processing unit 401 is further configured to deactivate the second AI model.

Optionally, the communication unit 402 is configured to receive a first signaling from a network device, the first signaling indicating the first model association information.

Optionally, the first model association information includes the first channel quality information, and the processing unit 401 is further configured to measure a received reference signal to obtain the first channel quality information.

Optionally, the communication unit 402 is further configured to send a second request message to a network device before updating the currently used second AI model. The second request message includes at least one of the following: use of an AI model suggested by a terminal device, attribute information of an AI model suggested by the terminal device, an AI model update duration suggest by the terminal device, reference signal information suggested by the terminal device, or a number of receive beams expected by the terminal device.

Optionally, an uplink resource corresponding to the second request message includes at least one of the following: a pre-configured periodic physical uplink channel resource, an uplink grant resource used most frequently in a first preset time period before the second request message being sent, a last used uplink grant resource, a next available uplink grant resource, a random access resource associated with the first model association information, a random access resource corresponding to reference signal information associated with the first model association information.

Optionally, the communication unit 402 is further configured to receive a second response message from the network device. The second response message includes at least one of the following: acknowledgement information or negative acknowledgement information, reference signal information matching the use of the AI model suggested by the terminal device, reference signal information of a reference signal sent by the network device, or a designated AI model update duration.

Optionally, the processing unit 401 is further configured to select a target AI model from AI models supported by a terminal device according to the first model association information in response to an output result of the first AI model not meeting a preset condition, and updating the first AI model to the target AI model; or select a target AI model from AI models supported by a terminal device according to the first model association information in response to a state of the first AI model being a deactivation state, and updating the first AI model or the second AI model to the target AI model; or select a target AI model from AI models supported by a terminal device according to the first model association information in response to the first AI model being different from an AI model indicated by AI model indication information, and updating the first AI model or the second AI model to the target AI model. The target AI model meets a similarity condition.

Optionally, the target AI model meeting the similarity condition includes at least one of the following: a difference between a model identifier of the first AI model and a model identifier of the target AI model being less than or equal to a first threshold; the first model association information being the same as or having a similarity greater than a second threshold with model association information associated with the target AI model; the target AI model being an AI model associated with preset cell information; where the preset cell information is contained in configured or activated cell information, or the preset cell information is cell information associated with a target transmission configuration indication (TCI) state, the target TCI state being indicated, configured, or activated by a second signaling; or the target AI model being an AI model used most frequently in a second preset time period before the second AI model being updated or the target AI model being a last used AI model.

Optionally, the communication unit 402 is further configured to receive a third signaling from a network device, the third signaling indicating the association relationship between the first model association information and the attribute information of the first AI model.

Optionally, the processing unit 401 is further configured to determine the association relationship between the first model association information and the attribute information of the first AI model.

Optionally, the association relationship between the first model association information and the attribute information of the first AI model is predefined by protocol.

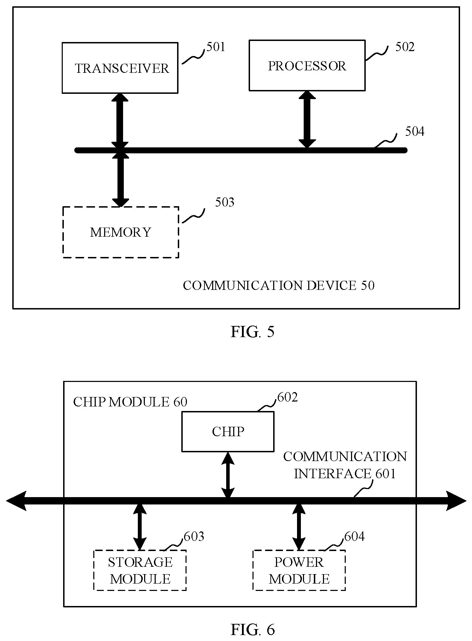

Please refer to FIG. 5, which is a schematic diagram of another communication device provided in embodiments of the present disclosure. The communication device 50 can be a terminal device, or it can be an apparatus matched with the terminal device. Optionally, the communication device can also include a memory 503. A transceiver 501, a processor 502, and the memory 503 can be connected through a bus 504 or other means. The bus is represented by a thick line in FIG. 5, and the connection between other components is only for illustrative purposes and is not limited. The bus can be divided into address bus, data bus, control bus, etc. For the sake of convenience in representation, FIG. 5 only uses one thick line to represent, but it does not mean that there is only one bus or only one type of bus.

Coupling in embodiments of the present disclosure between devices, units, or modules is indirect coupling or communication connection, which can be electrical, mechanical, or other forms, for information interaction between devices, units, or modules. The embodiments of the present disclosure do not limit the specific connection medium between the above transceiver 501, processor 502, and memory 503.

The memory 503 can include read-only memory (ROM) and random access memory (ROM), and provide instructions and data to the processor 502. A part of the memory 503 can also include non-transitory RAM.

The processor 502 can be a central processing unit (CPU), and the processor 502 can also be other general-purpose processors, digital signal processors (DSP), application-specific integrated circuits (ASIC), field-programmable gate arrays (FPGA), or other programmable logic devices, discrete gate or transistor logic devices, discrete hardware components, etc. General-purpose processors can be microprocessors, and optionally, the processor 502 can also be any conventional processor, etc.

In one optional implementation, the memory 503 is configured to store program instructions; the processor 502 is configured to invoke the program instructions stored in the memory 503 to perform operations executed by the terminal device in embodiments corresponding to FIG. 2 or FIG. 3.

In embodiments of the present disclosure, a general computing device, for example, a computer, including processing components and storage components such as a CPU, an RAM, an ROM, etc., can be configured to run computer programs (including program code) that can execute operations involved in the above methods, and implement the methods provided in embodiments of the present disclosure. The computer program can be recorded on a computer-readable recording medium, and then loaded into the computing device through the computer-readable recording medium and run on the computing device.

According to the same inventive concept, the communication device 50 provided in embodiments of the present disclosure solves the problem with the same principle and has the same beneficial effects as the embodiments illustrated in FIG. 2 or FIG.3, and reference can be made to the principles and beneficial effects of the method embodiments, which will not be repeated here for the sake of brevity.

The communication device, for example, can be: a chip or a chip module.

Embodiments of the present disclosure also provide a chip, which includes a processor. The processor is configured to execute operations related to the terminal device in the above method embodiments.

In one implementation, the chip is configured to: update a currently used second AI model in response to first model association information different from current model association information being detected; and/or update a currently used second AI model in response to current model association information being switched to first model association information; and/or update a currently used second AI model in response to detecting that current model association information exceeds a preset threshold or preset range; and/or update a currently used second AI model in response to an output result of the second AI model not meeting a preset condition.

Optionally, the chip is specifically configured to update the currently used second AI model to a first AI model in response to the first model association information different from the current model association information being detected; or update the currently used second AI model to a first AI model in response to the current model association information being switched to the first model association information. Attribute information of the first AI model has an association relationship with the first model association information, and attribute information of the second AI model has an association relationship with the current model association information.

Optionally, the first model association information includes at least one of the following: first operator identifier information, first public land mobile network (PLMN) information, first network device manufacturer identifier information, first tracking area identity (TAI) information, first steering of roaming (SOR) information, first user equipment route selection policy (URSP) information, first operating frequency information, first cell information, reference signal information associated with the first cell information, first channel quality information, first timestamp information, or first terminal device information; and

Optionally, the first cell information includes at least one of the following: first cell group information, first serving cell identifier information, first physical cell identifier information, first transmission reception point (TRP) identifier information, or first bandwidth part (BWP) identifier.

Optionally, the attribute information of the first AI model includes at least one of the following: a model identifier of the first AI model, model structure information of the first AI model, or a model parameter of the first AI model.

Optionally, the chip is specifically configured to update the currently used second AI model to the first AI model in response to the first AI model being different from the second AI model and a terminal device supporting the first AI model.

Optionally, the chip is further configured to select a target AI model from AI models supported by the terminal device according to the first model association information in response to the first AI model being different from the second AI model and the terminal device not supporting the first AI model, the target AI model meeting a similarity condition; and update the first AI model or the second AI model to the target AI model.

Optionally, the chip is further configured to send a first request message to a network device in response to the first AI model being different from the second AI model and the terminal device not supporting the first AI model, where the first request message indicates attribute information of a third AI model; receive a first response message from the network device; and update the first AI model or the second AI model to the third AI model in response to the first response message indicating acknowledgement information.

Optionally, the chip is further configured to update the association relationship between the current model association information and the attribute information of the second AI model to an association relationship between the first model association information and the attribute information of the second AI model in response to the first AI model being the same as the second AI model.

Optionally, the chip is further configured to deactivate the second AI model.

Optionally, the chip is configured to receive a first signaling from a network device, the first signaling indicating the first model association information.

Optionally, the first model association information includes the first channel quality information, and the chip is further configured to measure a received reference signal to obtain the first channel quality information.

Optionally, the chip is further configured to send a second request message to a network device before updating the currently used second AI model. The second request message includes at least one of the following: use of an AI model suggested by a terminal device, attribute information of an AI model suggested by the terminal device, an AI model update duration suggest by the terminal device, reference signal information suggested by the terminal device, or a number of receive beams expected by the terminal device.

Optionally, an uplink resource corresponding to the second request message includes at least one of the following: a pre-configured periodic physical uplink channel resource, an uplink grant resource used most frequently in a first preset time period before the second request message being sent, a last used uplink grant resource, a next available uplink grant resource, a random access resource associated with the first model association information, a random access resource corresponding to reference signal information associated with the first model association information.

Optionally, the chip is further configured to receive a second response message from the network device. The second response message includes at least one of the following: acknowledgement information or negative acknowledgement information, reference signal information matching the use of the AI model suggested by the terminal device, reference signal information of a reference signal sent by the network device, or a designated AI model update duration.

Optionally, the chip is further configured to select a target AI model from AI models supported by a terminal device according to the first model association information in response to an output result of the first AI model not meeting a preset condition, and updating the first AI model to the target AI model; or select a target AI model from AI models supported by a terminal device according to the first model association information in response to a state of the first AI model being a deactivation state, and updating the first AI model or the second AI model to the target AI model; or select a target AI model from AI models supported by a terminal device according to the first model association information in response to the first AI model being different from an AI model indicated by AI model indication information, and updating the first AI model or the second AI model to the target AI model. The target AI model meets a similarity condition.

Optionally, the target AI model meeting the similarity condition includes at least one of the following: a difference between a model identifier of the first AI model and a model identifier of the target AI model being less than or equal to a first threshold; the first model association information being the same as or having a similarity greater than a second threshold with model association information associated with the target AI model; the target AI model being an AI model associated with preset cell information; where the preset cell information is contained in configured or activated cell information, or the preset cell information is cell information associated with a target transmission configuration indication (TCI) state, the target TCI state being indicated, configured, or activated by a second signaling; or the target AI model being an AI model used most frequently in a second preset time period before the second AI model being updated or the target AI model being a last used AI model.

Optionally, the chip is further configured to receive a third signaling from a network device, the third signaling indicating the association relationship between the first model association information and the attribute information of the first AI model.

Optionally, the chip is further configured to determine the association relationship between the first model association information and the attribute information of the first AI model.

Optionally, the association relationship between the first model association information and the attribute information of the first AI model is predefined by protocol.

Please refer to FIG. 6, which is a schematic diagram of a chip module provided in embodiments of the present disclosure. The chip module 60 is configured to execute operations related to the terminal device in the above method embodiments. The chip module 60 includes a communication interface 601 and a chip 602.

The communication interface 601 is configured for internal communication of the chip module, or for communication between the chip module and external devices. The communication interface 601 can also be described as a communication module. The chip 602 is configured to implement the functionality of the terminal device in the present disclosure.

For example, the chip 602 is configured to: update a currently used second AI model in response to first model association information different from current model association information being detected; and/or update a currently used second AI model in response to current model association information being switched to first model association information; and/or update a currently used second AI model in response to detecting that current model association information exceeds a preset threshold or preset range; and/or update a currently used second AI model in response to an output result of the second AI model not meeting a preset condition.

Optionally, the chip module 60 can further include a storage module 603 and a power module 604. The storage module 603 is configured to store data and instructions. The power module 604 is configured to provide power to the chip module.

For each apparatus or product applied to or integrated in a chip, each module contained therein may be implemented by hardware such as circuits, or at least some of the modules may be implemented by a software program that runs on a processor integrated in the chip, and the remaining (if any) modules may be implemented by hardware such as circuits. For each apparatus and product applied to or integrated in the chip module, each module contained therein may be implemented by hardware such as circuits, different modules may be located in a same component (such as a chip, circuit module, etc.) or different components of the chip module, or at least some modules may be implemented by a software program that runs on a processor integrated in the chip module, and the remaining (if any) modules may be implemented by hardware such as circuits. For each apparatus and product applied to or integrated in the terminal, each module contained therein may be implemented by hardware such as circuits, and different modules can be located in a same component (for example, chip, circuit module, etc.) or different components in the terminal, or at least some of the modules may be implemented in the form of software programs that run on the processor integrated inside the terminal, and the remaining (if any) modules may be implemented by hardware such as circuits.

Embodiments of the present disclosure also provide a computer-readable storage medium, which stores one or more instructions which, when loaded and executed by a processor, cause the processor to perform the method provided in the above method embodiments.

The embodiments of the present disclosure also provide a computer program or computer program product, which includes code or instructions which, when executed on a computer, cause the computer to perform the method provided in the above method embodiments.

It may be noted that, for the sake of brevity, the foregoing embodiments are described as a series of action combinations. However, it will be appreciated by those skilled in the art that the disclosure is not limited to the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, or units involved are not necessarily essential to the disclosure.

In the foregoing embodiments, the elaboration of each embodiment has its own emphasis. For the parts not described in detail in one embodiment, reference can be made to related elaborations in other embodiments.

The operations of the method or algorithm described in embodiments of the disclosure may be implemented by means of hardware, or may be implemented by executing software instructions by a processor. The software instructions can be implemented by corresponding software modules, which can be stored in a RAM, a flash memory, a ROM, an EPROM, an electrically EPROM (EEPROM), registers, hard disk, mobile hard disk, CD-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in a terminal device or a management device. The processor and the storage medium may also be present as discrete components in the terminal device or the management device.

Those skilled in the art will appreciate that, all or part of functions described in embodiments of the disclosure can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Each module/unit in various devices or products described in the foregoing embodiments may be a software module/unit or a hardware module/unit, or some may be a software module/unit and some may be a hardware module/unit. For example, with regard to various devices or products applied to or integrated into a chip, various modules/units included therein may all be realized by means of hardware such as a circuit. Alternatively, at least some of the modules/units may be realized by means of a software program run on a processor integrated into the chip, and the rest (if any) modules/units may be implemented by means of hardware such as a circuit. With regard to various devices or products applied to or integrated into a chip module, various modules/units included therein may all be realized by means of hardware such as a circuit, and different modules/units can be located in the same component (such as chip, circuit module, etc.) or in different components of the chip module. Alternatively, at least some of the modules/units may be realized by means of a software program run on a processor integrated into the chip module, and the rest (if any) modules/units may be implemented by means of hardware such as a circuit. With regard to various devices or products applied to or integrated into a terminal device, various modules/units included therein may all be realized by means of hardware such as a circuit, and different modules/units can be located in the same component (such as chip, circuit module, etc.) or in different components of the terminal device. Alternatively, at least some of the modules/units may be realized by means of a software program run on a processor integrated into the chip module, and the rest (if any) modules/units may be implemented by means of hardware such as a circuit.

The objectives, technical solutions, and advantages of embodiments of the disclosure are described in detail in the foregoing implementations. It may be appreciated that, the foregoing elaborations are merely some implementations of embodiments of the disclosure, but are not intended to limit the protection scope of embodiments of the disclosure. Any modifications, equivalent replacements, improvements, and the like made according to the technical solutions of embodiments of the disclosure shall all fall within the protection scope of embodiments of the disclosure.

## Claims

1. A method for updating an artificial intelligence (AI) model, comprising:
updating a currently used second AI model in response to first model association information different from current model association information being detected; and/or
updating a currently used second AI model in response to current model association information being switched to first model association information; and/or
updating a currently used second AI model in response to detecting that current model association information exceeds a preset threshold or preset range; and/or
updating a currently used second AI model in response to an output result of the second AI model not meeting a preset condition.

2. The method according to claim 1, wherein,
updating the currently used second AI model in response to the first model association information different from the current model association information being detected comprises:
updating the currently used second AI model to a first AI model in response to the first model association information different from the current model association information being detected;
updating the currently used second AI model in response to the current model association information being switched to the first model association information comprises:
updating the currently used second AI model to a first AI model in response to the current model association information being switched to the first model association information;
wherein attribute information of the first AI model has an association relationship with the first model association information, and attribute information of the second AI model has an association relationship with the current model association information.

3. The method according to claim 2, wherein the first model association information comprises at least one of the following: first operator identifier information, first public land mobile network (PLMN) information, first network device manufacturer identifier information, first tracking area identity (TAI) information, first steering of roaming (SOR) information, first user equipment route selection policy (URSP) information, first operating frequency information, first cell information, reference signal information associated with the first cell information, first channel quality information, first timestamp information, or first terminal device information; and
wherein the first cell information comprises at least one of the following: first cell group information, first serving cell identifier information, first physical cell identifier information, first transmission reception point (TRP) identifier information, or first bandwidth part (BWP) identifier.

4. The method according to claim 2, wherein the attribute information of the first AI model comprises at least one of the following: a model identifier of the first AI model, model structure information of the first AI model, or a model parameter of the first AI model.

5. The method according to claim 2, wherein updating the currently used second AI model to the first AI model comprises:
updating the currently used second AI model to the first AI model in response to the first AI model being different from the second AI model and a terminal device supporting the first AI model.

6. The method according to claim 5, further comprising:
selecting a target AI model from AI models supported by the terminal device according to the first model association information in response to the first AI model being different from the second AI model and the terminal device not supporting the first AI model, the target AI model meeting a similarity condition; and
updating the first AI model or the second AI model to the target AI model.

7. The method according to claim 5, further comprising:
sending a first request message to a network device in response to the first AI model being different from the second AI model and the terminal device not supporting the first AI model, wherein the first request message indicates attribute information of a third AI model;
receiving a first response message from the network device; and
updating the first AI model or the second AI model to the third AI model in response to the first response message indicating acknowledgement information.

8. The method according to claim 5, further comprising:
updating the association relationship between the current model association information and the attribute information of the second AI model to an association relationship between the first model association information and the attribute information of the second AI model in response to the first AI model being the same as the second AI model.

9. The method according to any one of claims 1 to 8, further comprising:
deactivating the second AI model.

10. The method according to any one of claims 2 to 8, further comprising:
receiving a first signaling from a network device, the first signaling indicating the first model association information.

11. The method according to claim 3, wherein the first model association information comprises the first channel quality information, and the method further comprises:
measuring a received reference signal to obtain the first channel quality information.

12. The method according to claim 1, further comprising:
sending a second request message to a network device before updating the currently used second AI model, the second request message comprising at least one of the following: use of an AI model suggested by a terminal device, attribute information of an AI model suggested by the terminal device, an AI model update duration suggest by the terminal device, reference signal information suggested by the terminal device, or a number of receive beams expected by the terminal device.

13. The method according to claim 12, wherein an uplink resource corresponding to the second request message comprises at least one of the following: a pre-configured periodic physical uplink channel resource, an uplink grant resource used most frequently in a first preset time period before the second request message being sent, a last used uplink grant resource, a next available uplink grant resource, a random access resource associated with the first model association information, or a random access resource corresponding to reference signal information associated with the first model association information.

14. The method according to claim 12, further comprising:
receiving a second response message from the network device, the second response message comprising at least one of the following: acknowledgement information or negative acknowledgement information, reference signal information matching the use of the AI model suggested by the terminal device, reference signal information of a reference signal sent by the network device, or a designated AI model update duration.

15. The method according to claim 2, further comprising:
selecting a target AI model from AI models supported by a terminal device according to the first model association information in response to an output result of the first AI model not meeting a preset condition, and updating the first AI model to the target AI model; or
selecting a target AI model from AI models supported by a terminal device according to the first model association information in response to a state of the first AI model being a deactivation state, and updating the first AI model or the second AI model to the target AI model; or
selecting a target AI model from AI models supported by a terminal device according to the first model association information in response to the first AI model being different from an AI model indicated by AI model indication information, and updating the first AI model or the second AI model to the target AI model;
wherein the target AI model meets a similarity condition.

16. The method according to claim 6 or 15, wherein the target AI model meeting the similarity condition comprises at least one of the following:
a difference between a model identifier of the first AI model and a model identifier of the target AI model being less than or equal to a first threshold;
the first model association information being the same as or having a similarity greater than a second threshold with model association information associated with the target AI model;
the target AI model being an AI model associated with preset cell information; wherein the preset cell information is contained in configured or activated cell information, or the preset cell information is cell information associated with a target transmission configuration indication (TCI) state, the target TCI state being indicated, configured, or activated by a second signaling; or
the target AI model being an AI model used most frequently in a second preset time period before the second AI model being updated or the target AI model being a last used AI model.

17. The method according to claim 2, further comprising:
receiving a third signaling from a network device, the third signaling indicating the association relationship between the first model association information and the attribute information of the first AI model.

18. The method according to claim 2, further comprising:
determining the association relationship between the first model association information and the attribute information of the first AI model.

19. The method according to claim 2, wherein the association relationship between the first model association information and the attribute information of the first AI model is predefined by protocol.

20. A communication device, comprising:
a processing unit configured to update a currently used second AI model in response to first model association information different from current model association information being detected; and/or,
a processing unit configured to update a currently used second AI model in response to current model association information being switched to first model association information; and/or
a processing unit configured to update a currently used second AI model in response to detecting that current model association information exceeds a preset threshold or preset range; and/or
a processing unit configured to update a currently used second AI model in response to an output result of the second AI model not meeting a preset condition.

21. A communication device, comprising a processor, a memory, and a computer program or instruction stored in the memory, wherein the processor is configured to execute the computer program or instruction to implement the method according to any one of claims 1 to 19.

22. A chip, comprising a processor, wherein the processor is configured to execute the method according to any one of claims 1 to 19.

23. A chip module, comprising a communication module, a power module, a storage module, and a chip, wherein the power module is configured to provide power to the chip module, the storage module is configured to store data and instructions, the communication module is configured for internal communication of the chip module, or for communication between the chip module and external devices, and the chip is configured to execute the method according to any one of claims 1 to 19.

24. A computer-readable storage medium, storing a computer program or instruction which, when executed, is configured to execute the method according to any one of claims 1 to 19.
